# EUROPÄISCHE PATENTSCHRIFT

(11) **EP 4 052 622 B1**
(45) Veröffentlichungstag und Bekanntmachung des Hinweises auf die Patenterteilung: **05.06.2024**
(21) Anmeldenummer: 21160934.2
(22) Anmeldetag: 05.03.2021
(51) Int. Cl.: A47J 37/07, F23D 14/12, F24C 3/04, F24C 3/14

(54) **HAND-GRILLGERÄT**
HAND GRILLING APPARATUS
GRIL À MAIN

(43) Veröffentlichungstag der Anmeldung: 07.09.2022
(73) Patentinhaber: Rothenberger Industrial GmbH, 65779 Kelkheim (DE)
(72) Erfinder: Klimmer, Johann, 65779 Kelkheim (DE)
(74) Vertreter: Schwarz & Partner Patentanwälte GmbH

(56) Entgegenhaltungen:
- US-A- 3 229 680
- US-A- 3 814 573
- US-A- 3 857 670
- US-A- 5 645 043
- US-A1- 2020 063 970
- US-B2- 9 453 642

## Beschreibung

Die Erfindung betrifft ein Hand-Grillgerät zum Gratinieren, Rösten und Grillen umfassend ein Gehäuse, einen Heizstrahler ein Rohr und einen Griff und die Verwendung eines solchen Hand-Grillgeräts zum Grillen von Grillgut, Rösten von Nüssen oder Gratinieren einer Speise.

### HINTERGRUND DER ERFINDUNG

Hochtemperatur-Grillgeräte erlauben aufgrund der hohen Temperaturen bis zu 800 °C besondere Geschmacksaromen und ein Grillgut, das innen zart und saftig bleibt, während an der Außenseite eine perfekte Kruste entsteht. Es gibt eine Vielzahl von verschiedenen Hochtemperatur-Grillgeräten wie Oberhitze-Grillgeräte oder Vertikal-Grillgeräte, welche die unterschiedlichsten Zubereitungsarten von perfektem Grillgut ermöglichen. Diese Grillgeräte benötigen jedoch relativ viel Platz und werden nicht allen Anforderungen der modernen Grillkunst zugleich gerecht, weshalb meist mehrere verschiedene, sperrige Geräte zur Zubereitung eines Grillguts von höchster Endqualität benötigt werden.

Im Stand der Technik sind wenige Hand-Grillgeräte bekannt, welche die Verwendung mehrerer sperriger Grillgeräte vermeiden und gute Grillergebnisse ermöglichen.

In US 9,453,642 B2 bzw. US 10,105,851 B2 wird ein Hand-Grillgeräte offenbart, bei welchem ein konusförmiger Brennervorsatz mit Drahtgewebe an einem bestehenden Brenner aufgesteckt bzw. aufgeschraubt wird. Damit sollen die Nachteile bekannter Küchen-Brenner, welche zur Zubereitung von z.B. Crème Brûlée verwendet werden, überwunden werden, welche nur eine stiftförmige Flamme ausbilden können. Der konusförmige Aufsatz soll im Gegensatz dazu das Searen von größerem Grillgut wie Steaks ermöglichen, reduziert jedoch den Wärmefluss und das Drahtgewebe, welches das Heizelement bildet, ermöglicht keine gute Verteilung der Wärme.

Die Nachteile des in US 9,453,642 B2 offenbarten Hand-Brenners sollen in US 2020/063970 A1 überwunden worden sein. Dort wird ein Hand-Grillgerät mit zwei Infrarot-Keramik-Heizplatten offenbart, welche auf eine Gas-Quelle angeschlossen werden können. Bei der Gas-Quelle kann es sich um eine kleine Gasflasche bzw. Gaskartusche handeln, welche zugleich den Griff des Grillgeräts bildet. Die Keramik-Heizplatten sind dabei mithilfe eines engmaschigen und anliegenden Gitters in einem Gehäuse fixiert. Dabei ragen die Heizplatten samt Gitter jedoch leicht über das Gehäuse hinaus. Das Gitter ist dabei notwendig, um eine Stichflammenbildung, welche aufgrund der Nähe und Größe des handgeführten Infrarotbrenners gefährlich werden könnte, zu vermeiden. Außerdem wird das Hand-Grillgerät sehr nah an den äußerst groß dimensionierten Heizplatten gehalten und muss händisch gezündet werden, was eine starke Gefahr von Verbrennungen darstellt.

### KURZE BESCHREIBUNG DER ERFINDUNG

Der Erfindung liegt daher die Aufgabe zugrunde, ein flexibles und überall einsetzbares Hand-Grillgerät bereitzustellen, welches einen sehr sicheren Umgang und eine äußerst einfache Handhabe ermöglicht.

Gelöst wird diese Aufgabe durch ein Hand-Grillgerät zum Gratinieren, Rösten und Grillen, umfassend ein im Wesentlichen behälterförmiges Gehäuse, welches an der Unterseite offen ist, einen Heizstrahler, wobei der Heizstrahler vorzugsweise ein Gasbrenner ist, ein Rohr und einen Griff, welcher die Verlängerungen des Rohres bildet und einen Gitterrost, wobei der Heizstrahler im Gehäuse verbaut ist, wobei das Rohr in das Gehäuse ragt, wobei das Gehäuse über das Rohr mit dem Griff verbunden ist, wobei der Gitterrost an der offenen Unterseite des Gehäuses in einem Abstand von mindestens 0,5 cm vom Heizstrahler montiert ist.

Mit dem erfindungsgemäßen Hand-Grillgerät kann man einerseits Steaks oder anderes Grillgut mit großer Hitze grillen bzw. searen und andererseits Speisen gratinieren bzw. rösten. Durch den Abstand des Gitterrosts vom Heizstrahler, kann dieser direkt auf das Grillgut aufgesetzt werden ohne, dass dieses dabei verbrennt. Durch die große Hitze werden beispielsweise bei einem Steak die Poren instantan geschlossen, wodurch der Saft im Grillgut verbleibt.

Außerdem umfasst die Erfindung ein Hand-Grillgerät, bei welchem der Heizstrahler ein Gasbrenner ist, welcher mit einer Gaszuleitung verbunden ist, wobei die Gaszuleitung durch das Rohr, welches das Gehäuse mit dem Griff verbindet, verläuft und einen Anschluss für eine Gaskartusche aufweist. Erfindungsemäß handelt es sich bei dem Heizstrahler um einen Keramikbrenner, welcher eine Keramikplatte umfasst. Die Keramikplatte ist dabei im Gehäuse befestigt. Ein Keramikbrenner ermöglicht eine auf eine sehr breite Fläche verteilte Hitze von ca. 800 °C und erlaubt daher ein gleichmäßiges Grillen bzw. Gratinieren. Bevorzugt ist die Keramikplatte 8 bis 12 cm lang, 5 bis 8 cm breit und 0,6 bis 1,4 cm dick. Diese Dimensionen erlauben den idealen Kompromiss zwischen einem sehr sicheren Grillgerät und einer möglichst breiten Fläche.

In einer weiteren Ausführungsvariante ist an der Unterseite des Griffs, vorzugsweise senkrecht zum Griff, eine Gaskartusche anschließbar. In dieser Ausführungsvariante läuft die Gaszuleitung somit vom Rohr weiter in den Griff, an welchem der Anschluss für die Gaskartusche angebracht ist. Die Verwendung einer Gaskartusche erlaubt den flexiblen Transport des Hand-Grillgeräts, ohne ständig eine Gasflasche anschließen und abmontieren zu müssen und die Verwendung in Innenräumen. Bei der Gaskartusche kann es sich in einer Ausführungsvariante um eine Multigaskartusche handeln. Besonders bevorzugt ist die Gaskartusche am dem Rohr entgegengesetzten Ende des Griffs angebracht, um eine möglichst homogene Gewichtsverteilung des Gehäuses samt Heizstrahler und der Gaskartusche am Griff zu ermöglichen. Somit lässt sich das Hand-Grillgerät am Griff sehr gut tragen, ohne dass ein Übergewicht in Richtung Gehäuse bzw. Gaskartusche entsteht.

Besonders bevorzugt ist die Gaszufuhr an den Heizstrahler, bei welchem es sich in dieser Ausführungsvariante um einen Gasbrenner handelt, durch einen Regler regelbar, wobei der Regler die aus den Gaskartuschen durchgelassene Gasmenge zu dem Heizstrahler regelt. Bei dem Regler kann es sich um einen Drehschalter handeln. Dabei kann sich die zumindest eine Gaszuleitung durch ein Ventil öffnen und schließen lassen und der nachgeschalteter Drehschalter zusätzlich die an den Heizstrahler durchgelassene Gasmenge regulieren. Der Regler ist bevorzugt am dem Rohr entgegengesetzten Ende des Griffs in der Nähe des Anschlusses für die Gaskartuschen am Griff angebracht. Mithilfe des Reglers bzw. des Drehschalters lässt sich somit die Temperatur des Hand-Grillgeräts einstellen.

Außerdem umfasst das Hand-Grillgerät bevorzugt eine elektrische Zündvorrichtung, wobei die Zündvorrichtung vorzugsweise eine Piezozündung ist, wobei der Druckknopf für die elektrische Zündvorrichtung am Griff angeordnet ist. Die Zündung der Heizstrahler erfolgt somit elektrisch per Knopfdruck. Diese elektrische Zündvorrichtung erhöht die Sicherheit des Hand-Grillgeräts und erlaubt ein ferngesteuertes Zünden des Heizstrahlers.

Eine weitere Ausführungsvariante sieht vor, dass es sich bei dem Griff um eine Zweikomponenten-Griff mit einer zum Teil rutschfesten Oberfläche handelt. Bevorzugt ist der Griff zusätzlich ergonomisch geformt, sodass das Hand-Grillgerät sehr komfortabel und sicher mit einer Hand gehalten werden kann. Die rutschfeste Oberfläche verhindert, dass einer das Hand-Grillgerät bedienenden Person dieses aus der Hand rutscht bzw. fällt.

Besonders bevorzugt weist das Rohr, welches das Gehäuse mit dem Griff verbindet, eine Länge von mindestens 20 cm, vorzugsweise mindestens 30 cm, auf. Damit wird ein möglichst großer Abstand vom Heizstrahler zum Griff garantiert, um jegliche Verbrennungen bei der Bedienung des Hand-Grillgeräts zu vermeiden. Aufgrund dieses Abstands werden auch keine weiteren Abschirmungen zwischen Heizgerät und Griff benötigt, da sogar im Falle einer auftretenden Stichflamme, diese nie bis zum Griff zurückreichen würde. Außerdem kann das erfindungsgemäße Hand-Grillgerät somit auch zum Gratinieren eines Grillguts verwendet werden, welches sich gerade auf einem anderen Grillgerät befindet. Durch die Länge des Rohres ist die das Grillgerät bedienende Hand weit genug vom Gehäuse entfernt, welches sich daher über dem Grillgut befinden kann, ohne dass es zu Verbrennungen oder großen Hitzeeinwirkungen aufgrund der vom anderen Grillgerät abgestrahlten Hitze kommt.

Weiters kann das Rohr zumindest eine Biegung aufweisen. Im Zusammenspiel mit dem ergonomischen Griff des Hand-Grillgeräts erlaubt die Biegung einer das Hand-Grillgerät bedienenden Person, dass der Heizstrahler bzw. der darüber befindliche Gitterrost bei gerader Handhaltung automatisch parallel über dem zu grillenden bzw. gratinierenden Grillgut angeordnet sind.

Bevorzugt ist der Gitterrost lösbar mit dem Gehäuse verbindbar. Beispielsweise können sich am oberen Rand des Gehäuses Bohrungen bzw. Löcher befinden, durch welche die Stäbe des Gitterrosts gesteckt werden können. Indem diese Stäbe ein leicht gebogenes Ende aufweisen, wird verhindert, dass sich der Gitterrost vom Gehäuse ungewollt löst. Da der Gitterrost direkt auf das Grillgut aufgesetzt werden kann, ist es von Vorteil, wenn dieser von Zeit zu Zeit vom Hand-Grillgerät entfernt werden und gereinigt werden kann. Im Normalfall reicht jedoch die große Hitze des Heizstrahlers aus, um Verschmutzungen am Gitterrost mittels Pyrolyse zu zersetzten.

Beispielsweise kann der Gitterrost an der offenen Unterseite des Gehäuses in einem Abstand von mindestens 0,5 cm bis 3 cm, vorzugsweise 0,5 bis 1,5 cm vom Heizstrahler montiert sein.

In einer bevorzugten Ausführungsvariante umfasst das Gehäuse ein inneres Gehäuse und ein daran anschließendes äußeres Gehäuse. Dadurch ergibt sich über dem Heizstrahler eine doppelwandige Hülle, um eine große Hitzeabstrahlung und Verbrennungen zu vermeiden.

Weiters kann das Gehäuse Lüftungsöffnungen aufweisen. Durch diese können Verbrennungsgase, Qualm oder Rauch aus dem Gehäuseinneren entweichen. Die Lüftungsöffnungen können in Form von Lüftungsschlitzen ausgeführt sein.

Außerdem betrifft die Erfindung die Verwendung eines erfindungsgemäßen Hand-Grillgeräts zum Grillen eines Grillguts, wobei das Hand-Grillgeräts direkt am Grillgut aufliegt.

Des Weiteren kann das Hand-Grillgerät auch zum Rösten von Nüssen verwendet werden, wobei das Hand-Grillgerät über den Nüssen geschwenkt wird.

Zuletzt betrifft die Erfindung auch die Verwendung eines erfindungsgemäßen Hand-Grillgeräts zum Gratinieren einer Speise, wobei das Hand-Grillgerät über der Speise geschwenkt wird.

Die Verwendung des Hand-Grillgeräts erlaubt außerdem die ständige Beobachtung des Grillguts bzw. der Speise während dem Grillen bzw. Gratinieren. Somit lässt sich die Temperatur auch sehr einfach durch Sichtkontrolle regulieren und ein Verbrennen des Grillguts kann einfach verhindert werden indem das Hand-Grillgeräts vom Grillgut entfernt wird. Damit reduziert sich auch die Gefahr von Verletzungen, im Speziellen Verbrennungen, von Personen, welche das Hand-Grillgerät bedienen, da die Hitzequelle bereits vor dem Hantieren mit dem Grillgut bzw. der Speise entfernt wird.

### AUSFÜHRLICHE BESCHREIBUNG DER ERFINDUNG

Weitere Vorteile und Details der Erfindung werden nachfolgend anhand der folgenden Figuren und Figurenbeschreibungen erläutert.

Dabei zeigt:
- Fig. 1: eine Seitenansicht eines erfindungsgemäßen Hand-Grillgeräts.
- Fig. 2: eine Vorderansicht des Grillrosts des erfindungsgemäßen Hand-Grillgeräts.
- Fig. 3: eine perspektivische Darstellung des Gehäuses ohne Heizstrahler des Hand-Grillgeräts.
- Fig. 4: eine perspektivische Darstellung des äußeren Gehäuses des Hand-Grillgeräts.
- Fig. 5: eine Keramikplatte, welche in einer Ausführungsvariante Teil des Heizstrahlers des Hand-Grillgeräts ist.

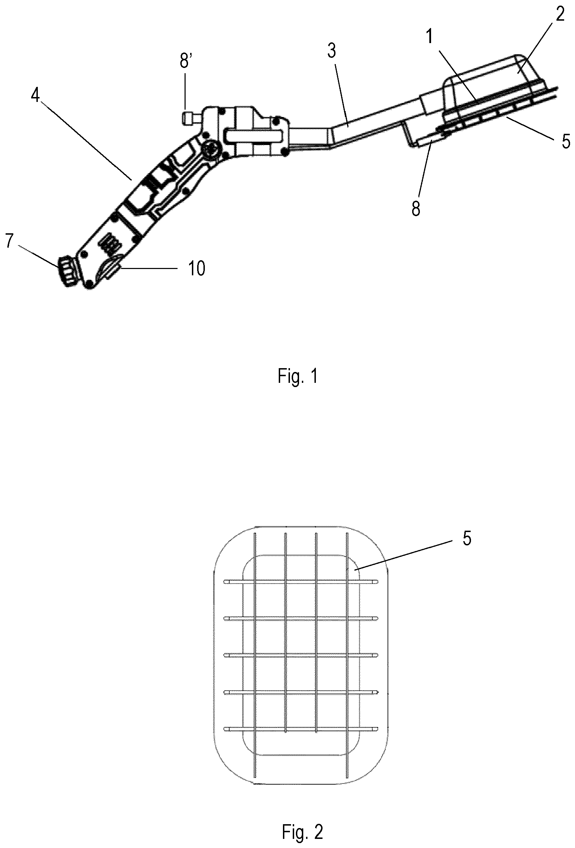

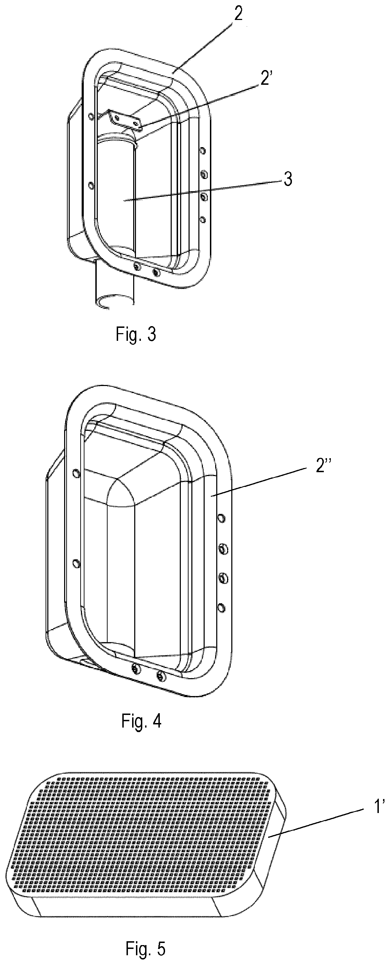

In Fig. 1 ist ein erfindungsgemäßes Hand-Grillgerät zum Gratinieren, Rösten und Grillen dargestellt, welches ein im Wesentlichen behälterförmiges Gehäuse 2, das an der Unterseite offen ist, einen Heizstrahler 1, ein Rohr 3 und einen Griff 4, welcher die Verlängerung des Rohres 3 bildet und einen Gitterrost 5 umfasst. Bevorzugt handelt es sich bei dem Heizstrahler 1 um einen Gasbrenner. Der Heizstrahler 1 ist in Fig. 1 von außen nicht ersichtlich, da der im Gehäuse 2 verbaut ist. Das Rohr 3 ragt, wie in Fig. 3 gezeigt, in das Gehäuse 2 und verbindet das Gehäuse 2 mit dem Griff 4.

Der erfindungsgemäße Gitterrost 5, welcher in Fig. 2 dargestellt ist, ist an der offenen Unterseite des Gehäuses 2 in einem Abstand von mindestens 0,5 cm vom Heizstrahler 1 montierbar ist. Der Gitterrost 5 kann beispielsweise in einem Abstand von 0,5 - 5 cm vom Heizstrahler 1 montiert sein. Bevorzugt ist er in einem Abstand von in etwa 2 cm vom Heizstrahler 1 montiert. Dadurch kann der Grillrost direkt auf das Grillgut aufgesetzt werden, ohne dass dieses verbrannt wird. Außerdem wird eine Stichflammenbildung vermieden.

Erfindungsemäß handelt es sich bei dem Heizstrahler 1 um einen Gasbrenner, welcher mit einer Gaszuleitung verbunden ist. Diese Gaszuleitung verläuft durch das Rohr 3 bis zu einem Anschluss 10 für eine Gaskartusche. Bevorzugt ist dieser Anschluss 10 wie in Fig. 1 gezeigt am Griff 4 angebracht. Dann verläuft die Gaszuleitung durch das Rohr 3 und den Griff 4 bis zum Anschluss 10, welcher sich an der Unterseite des Griffs 4 befinden kann. Der Anschluss 10 kann dabei am dem Rohr 3 entgegengesetzten Ende des Griffs 4 angebracht sein, um eine optimale Handhabe des Hand-Grillgeräts samt angeschlossener Gaskartusche zu ermöglichen. Die Gaskartusche kann dann senkrecht zum Griff 4 aufgeschraubt werden. Durch die in Fig. 1 gezeigte Position des Anschlusses 10 wird das Gewicht des Gehäuses 2 samt Heizstrahler 1 durch die Gaskartusche am Griff 4 ausgeglichen und ein komfortables Tragen des Hand-Grillgeräts mit nur einer Hand ermöglicht.

Außerdem kann es sich bei dem Griff 4 um einen Zweikomponenten-Griff mit einer zum Teil rutschfesten Oberfläche handeln. Dadurch lässt sich der Griff 4 noch besser mit einer Hand halten.

Erfindungsemäß ist der Heizstrahler 1 ein Keramikbrenner umfassend eine Keramikplatte 1'. Eine beispielhafte Keramikplatte 1' ist in Fig. 5 dargestellt. Um die Sicherheit des Hand-Grillgeräts zu garantieren, weist die Keramikplatte 1' vorzugsweise eine Länge von 8 bis 12 cm, eine Breite von 5 bis 8 cm und eine Dicke von 0,6 bis 1,4 cm auf. Eine solche Keramikplatte 1' ermöglicht eine gute Verteilung der Hitze und erreicht sehr hohe Temperaturen von in etwa 800 °C. Damit kann das Grillgut bzw. Speisen sehr gleichmäßig gratiniert, geröstet oder gegrillt werden. Der Keramikbrenner samt Keramikplatte 1' ist im Gehäuse 2 verbaut.

Des Weiteren kann die Gaszufuhr an den Heizstrahler 1 bzw. Keramikbrenner durch einen Regler 7 geregelt werden. Dieser Regler 7 steuert die aus der Gaskartusche durchgelassene Gasmenge zum Heizstrahler 1. Wie in Fig. 1 gezeigt kann der Regler 7 am freien Ende des Griffs angebracht sein.

In einer weiteren Ausführungsvariante umfasst das Hand-Grillgerät eine elektrische Zündvorrichtung 8, wobei die Zündvorrichtung 8 vorzugsweise eine Piezozündung ist. Der Druckknopf 8` für die elektrische Zündvorrichtung 8 kann am Griff 4 angeordnet sein. Wie in Fig. 1 gezeigt kann der Druckknopf 8` an der Oberseite des Griffs 4 angeordnet sein, sodass er leicht mit dem Daumen gedrückt werden kann, während das Hand-Grillgerät mit derselben Hand gehalten wird. Das Kabel zwischen Zündvorrichtung 8 und Druckknopf 8` kann dabei an der Unterseite des Rohrs 3 verlaufen.

Des Weiteren kann der Gitterrost 5 lösbar mit dem Gehäuse 2 verbunden werden. Wie in Fig. 2 gezeigt kann der Gitterrost 5 mittels der einzelnen Stäbe des Gitterrostes 5 mit dem Gehäuse 2 verbunden werden, indem die Stäbe durch Löcher oder Bohrungen am Gehäuse 2 gesteckt werden. Indem die Enden der Stäbe des Gitterrosts 5 leicht gebogen sind, kann dieser am Gehäuse lösbar fixiert werden.

Wie in den Fig. 3 und 4 dargestellt kann das Gehäuse 2 ein inneres Gehäuse 2' (Fig. 3) und ein daran anschließendes äußeres Gehäuse 2" (Fig.4) umfassen. Die Form des äußeren Gehäuses 2" kann dabei im Wesentlichen der Form des inneren Gehäuses 2' entsprechen, wobei das innere Gehäuse 2' geringfügig kleiner ist als das äußere Gehäuse 2", um in diesem aufgenommen werden zu können. Die beiden Gehäuse 2', 2" können mittels Verbindungsmittel wie z.B. Schrauben verbunden werden. Das Rohr 3 ragt dabei bis in das innere Gehäuse 2' und der Heizstrahler 1 wird im inneren Gehäuse 2' verbaut. Durch die Verwendung der beiden Gehäuse 2', 2" bildet sich eine doppelwandige Hülle über dem Heizstrahler 1, welche eine große Hitzeabstrahlung und Verbrennungen verhindert.

Außerdem kann das Gehäuse 2 auch noch Lüftungsöffnungen aufweisen, welche den Austritt von Rauch, Qualm und sonstigen Verbrennungsgasen ermöglicht.

Zusammengefasst erlaubt das erfindungsgemäße Hand-Grillgerät einen sehr sicheren Umgang und kann zum Grillen, Rösten und Gratinieren von Grillgut, Speisen oder Nüssen verwendet werden. Zudem kann es auch zeitgleich mit einem weiteren Grillgerät wie z.B. einem Gas-, Elektro- oder Holzkohlegrillgerät verwendet werden und die am Grillgerät aufliegenden Grillgüter gratinieren bzw. searen. So kann beispielsweise mithilfe des Hand-Grillgeräts ein Steak zubereitet werden, welches eine perfekte Kruste aufweist.

## Patentansprüche

1. Hand-Grillgerät zum Gratinieren, Rösten und Grillen, umfassend
• ein im Wesentlichen behälterförmiges Gehäuse (2), welches an der Unterseite offen ist,
• einen Heizstrahler (1), wobei der Heizstrahler (1) vorzugsweise ein Gasbrenner ist,
• ein Rohr (3) und einen Griff (4), welcher die Verlängerungen des Rohres bildet,
• und einen Gitterrost (5),
wobei der Heizstrahler (1) im Gehäuse (2) verbaut ist, wobei das Rohr (3) in das Gehäuse (2) ragt, wobei das Gehäuse (2) über das Rohr (3) mit dem Griff (4) verbunden ist, wobei der Heizstrahler (1) ein Keramikbrenner umfassend eine Keramikplatte (1') ist, welcher mit einer Gaszuleitung verbunden ist, wobei die Gaszuleitung durch das Rohr (3), welches das Gehäuse (2) mit dem Griff (4) verbindet, verläuft und einen Anschluss (10) für eine Gaskartusche (6) aufweist, **dadurch gekennzeichnet, dass** der Gitterrost (5) an der offenen Unterseite des Gehäuses (2) in einem Abstand von mindestens 0,5 cm vom Heizstrahler (1) montiert ist.

2. Hand-Grillgerät nach Anspruch 1, wobei die Gaskartusche an der Unterseite des Griffs (4), vorzugsweise senkrecht zum Griff (4), anschließbar ist.

3. Hand-Grillgerät nach einem der Ansprüche 1 oder 2, **dadurch gekennzeichnet, dass** die Gaszufuhr an den Heizstrahler (1) durch einen Regler (7) regelbar ist, wobei der Regler (7) die aus der Gaskartusche durchgelassene Gasmenge zu dem Heizstrahler (1) regelt.

4. Hand-Grillgerät nach einem der Ansprüche 1 bis 3, **gekennzeichnet durch** eine elektrische Zündvorrichtung (8), wobei die Zündvorrichtung (8) vorzugsweise eine Piezozündung ist, wobei der Druckknopf (8') für die elektrische Zündvorrichtung (8) am Griff (4) angeordnet ist.

5. Hand-Grillgerät nach einem der Ansprüche 1 bis 5, wobei es sich bei dem Griff (4) um einen Zweikomponenten-Griff mit einer zum Teil rutschfesten Oberfläche handelt.

6. Hand-Grillgerät nach einem der Ansprüche 1 bis 5, **dadurch gekennzeichnet, dass** das Rohr (3) eine Länge von mindestens 20 cm, vorzugsweise mindestens 30 cm, aufweist.

7. Hand-Grillgerät nach einem der Ansprüche 1 bis 6, **dadurch gekennzeichnet, dass** das Rohr (3) zumindest eine Biegung (3') aufweist.

8. Hand-Grillgerät nach einem der Ansprüche 1 bis 7, wobei der Gitterrost (5) lösbar mit dem Gehäuse (2) verbindbar ist.

9. Hand-Grillgerät nach einem der Ansprüche 1 bis 8, **dadurch gekennzeichnet, dass** das Gehäuse (2) ein inneres Gehäuse (2') und ein daran anschließendes äußeres Gehäuse (2") umfasst.

10. Hand-Grillgerät nach einem der Ansprüche 1 bis 9, **dadurch gekennzeichnet, dass** das Gehäuse (2) Lüftungsöffnungen aufweist.

11. Verwendung eines Hand-Grillgeräts nach einem der Ansprüche 1 bis 10 zum Grillen eines Grillguts, wobei das Hand-Grillgeräts direkt am Grillgut aufliegt.

12. Verwendung eines Hand-Grillgeräts nach einem der Ansprüche 1 bis 10 zum Rösten von Nüssen, wobei das Hand-Grillgerät über den Nüssen geschwenkt wird.

13. Verwendung eines Hand-Grillgeräts nach einem der Ansprüche 1 bis 10 zum Gratinieren einer Speise, wobei das Hand-Grillgerät über der Speise geschwenkt wird.

## Claims

1. Hand-held grill for gratinating, roasting and grilling, comprising
• a substantially container-shaped housing (2) that is open at the bottom,
• a radiant heater (1), the radiant heater (1) preferably being a gas burner,
• a pipe (3) and a handle (4) forming an extension of the pipe,
• and a grate (5),
the radiant heater (1) being integrated into the housing (2), the pipe (3) extending into the housing (2), the housing (2) being connected to the handle (4) via the pipe (3), the radiant heater (1) being a ceramic burner comprising a ceramic plate (1'), which ceramic burner is connected to a gas supply line, wherein the gas supply line runs through the pipe (3) connecting the housing (2) to the handle (4) and has a connection (10) for a gas cartridge (6), **characterized in that** the grate (5) is mounted to the open bottom side of the housing (2) at a distance of at least 0.5 cm from the radiant heater (1).

2. Hand-held grill according to claim 1, wherein the gas cartridge is connectable to the bottom side of the handle (4), preferably perpendicular to the handle (4).

3. Hand-held grill according to any one of claims 1 or 2, **characterized in that** the supply of gas to the radiant heater (1) is controllable via a controller (7), wherein the controller (7) controls the amount of gas passing from the gas cartridge to the radiant heater (1).

4. Hand-held grill according to any one of claims 1 to 3, **characterized by** an electric ignition device (8), the ignition device (8) preferably being a piezo ignition, wherein the press button (8') for the electric ignition device (8) is arranged on the handle (4).

5. Hand-held grill according to any one of claims 1 to 5, wherein the handle (4) is a two-component handle with a partly anti-slip surface.

6. Hand-held grill according to any one of claims 1 to 5, **characterized in that** the pipe (3) has a length of at least 20 cm, preferably at least 30 cm.

7. Hand-held grill according to any one of claims 1 to 6, **characterized in that** the pipe (3) has at least one bend (3').

8. Hand-held grill according to any one of claims 1 to 7, wherein the grate (5) is releasably connectable to the housing (2).

9. Hand-held grill according to any one of claims 1 to 8, **characterized in that** the housing (2) comprises an inner housing (2') and an adjacent outer housing (2").

10. Hand-held grill according to any one of claims 1 to 9, **characterized in that** the housing (2) has ventilation openings.

11. Use of a hand-held grill according to any one of claims 1 to 10 for grilling grillware, wherein the hand-held grill rests directly on top of the grillware.

12. Use of a hand-held grill according to any one of claims 1 to 10 for roasting nuts, wherein the hand-held grill is swung over the nuts.

13. Use of a hand-held grill according to any one of claims 1 to 10 for gratinating a dish, wherein the hand-griller is swung over the dish.

## Revendications

1. Appareil à griller manuel permettant de gratiner, rôtir et griller, comprenant
• un habillage (2) essentiellement en forme de cuvette, qui est ouvert au niveau de la face inférieure,
• une salamandre (1), ladite salamandre (1) étant de manière préférée un brûleur à gaz,
• un tube (3) et une poignée (4) formant les prolongements du tube,
• et une grille (5),
la salamandre (1) étant installée dans l'habillage (2), le tube (3) faisant saillie dans l'habillage (2), l'habillage (2) étant relié à la poignée (4) par le tube (3), la salamandre (1) étant un brûleur en céramique comprenant une plaque en céramique (1') reliée à une conduite d'alimentation en gaz, la conduite d'alimentation en gaz traversant le tube (3) qui relie l'habillage (2) à la poignée (4) et présentant un raccordement (10) destiné à une cartouche de gaz (6),
**caractérisé en ce que** la grille (5) est installée au niveau de la face inférieure ouverte de l'habillage (2) à une distance d'au moins 0,5 cm de la salamandre (1).

2. Appareil à griller manuel selon la revendication 1, la cartouche de gaz pouvant être raccordée à la face inférieure de la poignée (4), de manière préférée perpendiculairement à la poignée (4).

3. Appareil à griller manuel selon l'une quelconque des revendications 1 ou 2, **caractérisé en ce que** l'alimentation en gaz peut être régulée au niveau de la salamandre (1) grâce à un régulateur (7), ledit régulateur (7) régulant la quantité de gaz autorisée à passer de la cartouche de gaz à la salamandre (1).

4. Appareil à griller manuel selon l'une quelconque des revendications 1 à 3, **caractérisé par** un dispositif d'allumage électrique (8), ledit dispositif d'allumage (8) étant de manière préférée un allumage piézo-électrique, le bouton-poussoir (8') destiné au dispositif d'allumage électrique (8) étant agencé au niveau de la poignée (4).

5. Appareil à griller manuel selon l'une quelconque des revendications 1 à 5, la poignée (4) étant une poignée à deux composants munie d'une surface partiellement antidérapante.

6. Appareil à griller manuel selon l'une quelconque des revendications 1 à 5, **caractérisé en ce que** le tube (3) présente une longueur d'au moins 20 cm, de manière préférée d'au moins 30 cm.

7. Appareil à griller manuel selon l'une quelconque des revendications 1 à 6, **caractérisé en ce que** le tube (3) présente au moins un coude (3').

8. Appareil à griller manuel selon l'une quelconque des revendications 1 à 7, la grille (5) pouvant être reliée de manière amovible à l'habillage (2).

9. Appareil à griller manuel selon l'une quelconque des revendications 1 à 8, **caractérisé en ce que** l'habillage (2) comprend un habillage intérieur (2') et un habillage extérieur (2") s'y raccordant.

10. Appareil à griller manuel selon l'une quelconque des revendications 1 à 9, **caractérisé en ce que** l'habillage (2) présente des orifices de ventilation.

11. Utilisation d'un appareil à griller manuel selon l'une quelconque des revendications 1 à 10 pour griller un aliment à griller, ledit appareil à griller manuel reposant directement sur l'aliment à griller.

12. Utilisation d'un appareil à griller manuel selon l'une quelconque des revendications 1 à 10 pour griller des fruits à coques, ledit appareil à griller manuel étant pivoté au-dessus des noix.

13. Utilisation d'un appareil à griller manuel selon l'une quelconque des revendications 1 à 10 pour gratiner un plat, ledit appareil à griller manuel étant pivoté au-dessus du plat.
